# NOUVEAU FASCICULE DE BREVET EUROPEEN

(11) **EP 1 387 774 B2**
(45) Date de publication et mention de la décision concernant l'opposition: **13.11.2013**
(45) Mention de la délivrance du brevet: 22.04.2009
(21) Numéro de dépôt: 02727932.2
(22) Date de dépôt: 15.05.2002
(51) Int. Cl.: B60H 1/00

(54) **BO TIER DE GUIDAGE D'AIR**
LUFTLEITKASTEN
AIR GUIDE CASING

(30) Priorité: 17.05.2001 DE 10124153
(43) Date de publication de la demande: 11.02.2004
(73) Titulaire: Valeo Klimasysteme GmbH, 96476 Rodach (DE)
(72) Inventeur: GESELL, Bodo, 64850 Schaamfheim (DE); FIENE, Andreas, 38446 Wolfsburg (DE); TAUBER, Werner, 96257 Obristfeld (DE)
(74) Mandataire: Benoit, Monique
(86) Numéro de dépôt international: PCT/IB2002/001741
(87) Numéro de publication internationale: WO 2002/092367

(56) Documents cités:
- EP-A1- 1 500 532
- DE-A- 4 414 036
- DE-A- 19 748 787
- DE-A- 19 963 796
- DE-A1- 10 025 334
- DE-A1- 19 817 896
- DE-A1- 19 926 389
- DE-A1- 19 957 858
- DE-A1-102005 048 910
- DE-A1-102009 009 912
- FR-A1- 2 778 151
- FR-A1- 2 783 756
- JP-A- 2001 071 735
- US-A- 5 876 277
- US-B2- 6 319 112

## Description

La présente invention concerne en général un boîtier de guidage d'air et en particulier un boîtier de guidage d'air qui est également appelé boîte d'air frais-air ambiant, comprenant une entrée d'air frais, une entrée d'air ambiant et une sortie d'air.

On trouve habituellement au niveau de la sortie d'air ou derrière celle-ci une soufflante, qui peut aspirer de l'air par le biais de l'entrée d'air frais ou de l'entrée d'air ambiant, afin de refouler celui-ci dans l'espace intérieur du véhicule, après qu'il est passé par un évaporateur et/ou un échangeur de chaleur. Afin de pouvoir ainsi alimenter l'espace intérieur du véhicule de manière sélective en air frais ou en air ambiant, on prévoit habituellement un clapet d'air frais-air ambiant de telle sorte que l'on puisse connecter au choix la sortie d'air à l'entrée d'air frais ou à l'entrée d'air ambiant. On connaît par le document DE-A-4228866 un tel boîtier de guidage d'air du type générique, dans lequel un clapet à coquille en forme de segment de sphère remplit cette fonction.

Ces dernières années, il s'est avéré que dans le mode d'air frais, une régulation de la pression dynamique était nécessaire afin de pouvoir contrôler, pour de grandes vitesses du véhicule, le débit d'air à travers l'appareil de chauffage et/ou de climatisation. Afin de réaliser la régulation de la pression dynamique, on monte habituellement un clapet à papillon ou à ailettes en amont du volet d'air frais-air ambiant dans l'entrée d'air frais. Ceci donne lieu toutefois à une augmentation inadmissible de l'espace de construction nécessaire. Le document DE-A-4414036 a donc proposé de prévoir deux clapets à coquille coaxiaux l'un à l'autre, l'un des clapets à coquille servant de clapet d'air frais-air ambiant au sens usuel et l'autre clapet à coquille servant de clapet pour la pression dynamique. L'utilisation de deux clapets à coquille l'un dans l'autre avec des axes coaxiaux est toutefois compliquée du point de vue de la cinématique et limite les possibilités d'agir sur les flux d'air.

Le document DE19748787, qui constitue l'art antérieur le plus proche, propose un boîtier de guidage d'air avec une entrée d'air frais, une entrée d'air ambiant et une sortie d'air, un clapet à coquille étant prévu pour connecter, dans ses positions extrêmes, au choix la sortie d'air à l'entrée d'air frais ou à l'entrée d'air ambiant, ledit boîtier comprenant au moins un clapet à ailettes ou à papillon qui est actionné en fonction de la position du clapet à coquille et qui peut pivoter librement en utilisant le volume libéré par le clapet à coquille et s'insère alors en partie dans le volume dans lequel le clapet à coquille agit.

La présente invention a donc pour objet de perfectionner un boîtier de guidage d'air du type mentionné en introduction, de telle sorte que l'on puisse influencer les flux d'air mis en jeu de manière polyvalente tout en conservant une cinématique simple.

Cet objet est réalisé selon l'invention par un boîtier de guidage d'air ayant les caractéristiques de la revendication 1. Des formes de réalisation préférées sont définies dans les revendications dépendantes.

L'invention se base sur l'idée de combiner les avantages d'un contrôle du flux d'air au moyen d'un clapet à coquille et d'un clapet à papillon, sans augmenter l'espace de construction nécessaire au moins du côté de l'entrée d'air frais. De manière particulièrement surprenante, la fonction d'air frais-air ambiant et la régulation de la pression dynamique peuvent être réalisées avec une cinématique simple en combinant un clapet à coquille et un clapet à papillon en économisant de la place et de manière efficace, en faisant coopérer les propriétés avantageuses respectives des deux types de clapets de manière synergique, ce qui améliore les caractéristiques d'écoulement globales et permet de les influencer de manière extrêmement variée.

Selon une forme de réalisation préférée, les axes du clapet à coquille et du clapet à papillon sont essentiellement parallèles, ceux-ci étant, de manière particulièrement préférée, espacés d'au moins la dimension radiale maximale du clapet à coquille par rapport à son axe. En prévoyant les axes parallèles, on peut réaliser une activation couplée alternative au moyen d'une cinématique très simple. L'espacement particulièrement avantageux garantit que le clapet à coquille reste librement mobile, car il ne peut interagir à aucun moment avec la partie fixe du clapet à papillon.

Dans une autre forme de réalisation, les axes du clapet à coquille et du clapet à papillon sont prévus essentiellement perpendiculairement l'un à l'autre. Cette configuration permet par exemple de tenir compte du profil de la pression dynamique existant à l'intérieur du boîtier, en plaçant les axes dans une position où la pression dynamique régnante est la plus élevée, de sorte que les forces de levier agissant sur le clapet à papillon puissent être manipulées aisément.

Avantageusement, le clapet à papillon peut réduire la section transversale de l'ouverture de sortie et/ou de l'ouverture d'entrée d'air ambiant. Ainsi, par exemple, la régulation de la pression dynamique peut avoir lieu directement devant la soufflante, lorsque l'on prévoit le clapet à papillon au niveau de l'ouverture de sortie, un élément de conduit d'air pouvant dans ce cas être prévu dans le mode dit d'air ambiant. Lorsque l'on prévoit le clapet à papillon de telle sorte qu'il puisse réduire l'ouverture d'entrée d'air ambiant, ceci fait en sorte que l'on puisse utiliser le clapet à coquille de manière sélective pour effectuer la fonction de commutation de l'air frais-air ambiant ou pour servir de clapet pour la pression dynamique.

En outre, on préfère que le clapet à papillon se trouve dans au moins une position complètement dans l'entrée d'air ambiant. Dans cette partie, le clapet à coquille peut être librement mobile au moins dans cette position du clapet à papillon. Par exemple, le clapet à coquille peut fermer l'entrée d'air frais, tandis que le clapet à papillon peut servir à la régulation du débit d'air ambiant.

Afin de pouvoir réduire l'espace de construction requis, le volume dans lequel le clapet à coquille peut se trouver, est utilisé pour permettre le pivotement du clapet à papillon, en particulier lorsque le clapet à coquille ne se trouve pas dans cette partie du volume. Si l'on utilise donc le clapet à coquille dans le mode"fermeture de l'air frais"ou"régulation de la pression dynamique", le clapet à coquille se trouvera, de façon déterminante, dans la région de l'entrée d'air frais, de sorte que la région de l'entrée d'air ambiant est libre et peut être utilisée pour pivoter le clapet à papillon, afin de permettre une addition d'air ambiant ou également d'empêcher une circulation en sens contraire vers l'intérieur dans la sortie de l'air ambiant.

Afin de permettre le mode de fonctionnement double du clapet à coquille, on préfère que le clapet à papillon supporte et/ou remplace sa fonction dans la position bloquant l'entrée d'air ambiant. Il est ainsi possible, par le biais du clapet à papillon, de réaliser le boîtier de guidage d'air selon l'invention comme si seulement une alimentation en air frais était possible, en fermant le passage d'air ambiant. Dans ce cas, il convient de noter que selon une forme de réalisation particulièrement préférée, le clapet à coquille peut recouvrir le clapet à papillon dans une mesure telle que l'entrée d'air frais soit libérée. Ainsi, par exemple dans un mode d'aération maximale, la pression dynamique peut être complètement utilisée, sans qu'il se présente le risque d'un mouvement d'air dans le sens contraire vers l'intérieur dans l'ouverture d'entrée d'air ambiant, car celle-ci peut être fermée par les deux clapets.

Selon un perfectionnement du boîtier de guidage d'air selon l'invention, il est prévu le dispositif d'étanchéité qui isole hermétiquement le clapet à coquille dans au moins l'une des positions s'écartant des positions extrêmes par rapport au boîtier de guidage d'air. Par exemple, plusieurs lèvres peuvent être prévues sur le contour extérieur du clapet à coquille afin d'éviter que de l'air ne puisse passer vers l'arrière dans une position intermédiaire du clapet à coquille.

Finalement, on préfère que dans le boîtier de guidage d'air selon l'invention, les clapets puissent être positionnés de telle sorte que l'on puisse assurer une régulation de la pression dynamique et/ou un mode d'air ambiant partiel.

D'autres avantages et caractéristiques de la présente invention résultent de la description suivante de quelques formes de réalisation actuellement préférées, données à titre uniquement illustratif et non limitatif, et en référence aux dessins annexés, dans lesquels :
la figure 1 illustre schématiquement un boîtier de guidage d'air selon une première forme de réalisation qui ne fait pas partie de l'invention revendiquée.
La figure 2 illustre, dans une vue en coupe schématique, une variante de réalisation ne faisant pas partie de l'invention revendiquée.
La figure 3 illustre une autre variante de réalisation avec des géométries et des angles de pivotement différents du clapet à coquille qui ne fait pas partie de l'invention revendiquée.
La figure 4 illustre une autre variante de réalisation avec différents agencements possibles de clapets à ailettes ou à papillon qui ne fait pas partie de l'invention revendiquée.
La figure 5 illustre une forme de réalisation différente avec des axes de clapets s'étendant perpendiculairement qui ne fait pas partie de l'invention revendiquée.
La figure 6 illustre une forme de réalisation perfectionnée d'un boîtier de guidage d'air selon l'invention.
La figure 7 illustre une autre forme de réalisation alternative qui ne fait pas partie de l'invention revendiquée.

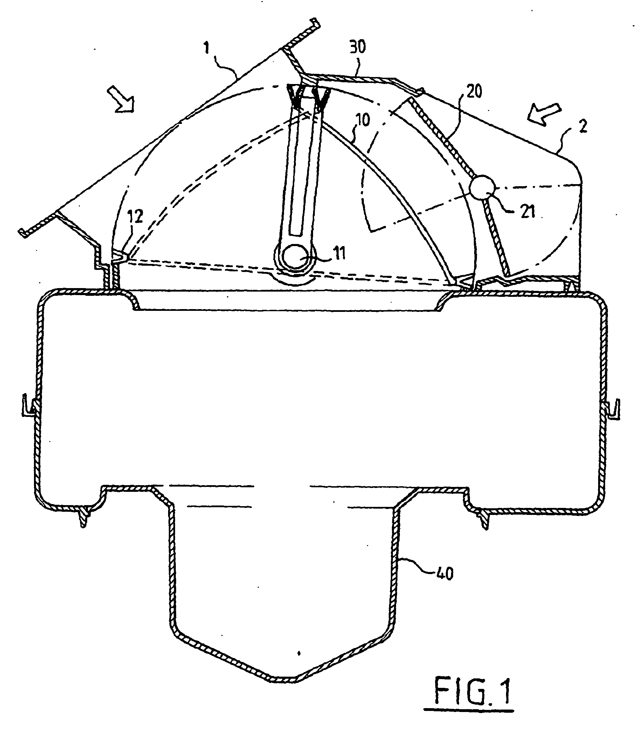

La figure 1 illustre une première forme de réalisation d'un boîtier de guidage d'air. Celui-ci comprend, dans une portion de boîtier supérieure 30, une entrée d'air frais 1, une entrée d'air ambiant 2 ainsi qu'une sortie d'air 3, qui conduit à une portion de boîtier inférieure 40 dans laquelle on peut disposer une soufflante non illustrée afin d'activer l'air et ensuite de le refouler à travers des composants d'une installation de chauffage et/ou de climatisation afin de pouvoir restituer cet air par des buses d'air dans la partie intérieure du véhicule. Comme illustré, un clapet à coquille 10 est monté pivotant autour d'un axe 11, et présente, à ses extrémités, des lèvres d'étanchéité 12 en forme de V afin de pouvoir venir en prise hermétiquement dans ses positions extrêmes avec des portions de paroi réalisées en conséquence de la partie supérieure du boîtier 30. Le clapet à coquille 10 est illustré en pointillés dans la position dans laquelle il bloque l'entrée d'air frais 1 et en traits pleins dans la position dans laquelle il bloque l'entrée d'air ambiant 2. Le clapet à coquille 10 peut être disposé dans des positions quelconques entre ces deux positions extrêmes.

Dans l'entrée d'air ambiant 2 se trouve un axe 21 essentiellement parallèle à l'axe 11, sur lequel est monté rotatif un clapet à papillon. Comme illustré, le clapet à papillon 20 est réalisé suivant une configuration asymétrique, les deux ailettes présentant un angle inférieur à 180°. Par la suite, les différents modes de fonctionnement du boîtier de guidage d'air illustré vont être brièvement exposés :

Dans le mode air ambiant, le clapet à coquille ferme l'entrée d'air frais 1 de manière étanche, en faisant s'appliquer les lèvres d'étanchéité 11 contre la paroi 30 du boîtier (position illustrée en pointillés). Dans cette position du clapet à coquille 10, le clapet à papillon 20 peut pivoter librement en utilisant le volume libéré par le clapet à coquille 10. Comme illustré, les deux clapets 10,20 forment un système de conduit d'air en forme de canal, qui permet une meilleure aspiration de l'air ambiant hors de l'espace intérieur du véhicule au moyen de la soufflante (non illustrée).

Dans le mode air frais exclusivement, par exemple pour une ventilation rapide de l'espace intérieur, le clapet à coquille 10 se trouve dans une position dans laquelle il bloque l'entrée d'air ambiant 2 (position du clapet à coquille illustrée en traits pleins) et libère complètement l'entrée d'air frais 1. Les lèvres d'étanchéité 12 s'appliquent à nouveau de façon hermétique contre la portion supérieure 30 du boîtier. La fonction d'étanchéité peut être supportée du point de vue de la technique des fluides derrière le clapet à coquille fermé 10 dans l'entrée d'air ambiant 2 par le clapet à papillon fermé 20, de sorte que mme à de grandes vitesses du véhicule, on puisse garantir une bonne étanchéité.

A de très grandes vitesses du véhicule et dans un mode qui prévoit une aération modérée, il faut réguler la pression dynamique causée par la vitesse du véhicule.

A cet effet, on peut insérer partiellement le clapet à coquille 10 dans l'entrée d'air frais 1, afin de réduire la section transversale existante, et ce de manière librement sélectionnable, car l'entrée d'air ambiant reste fermée comme avant par le clapet à papillon 20.

Un mode d'air ambiant partiel peut également être réalisé avec la forme de réalisation illustrée. Pour ce mode, dans le fonctionnement d'air frais à régulation de la pression dynamique, comme décrit ci-dessus, le clapet à ailettes ou à papillon 20 est ouvert, les deux clapets se trouvant dans une position d'ouverture partielle.

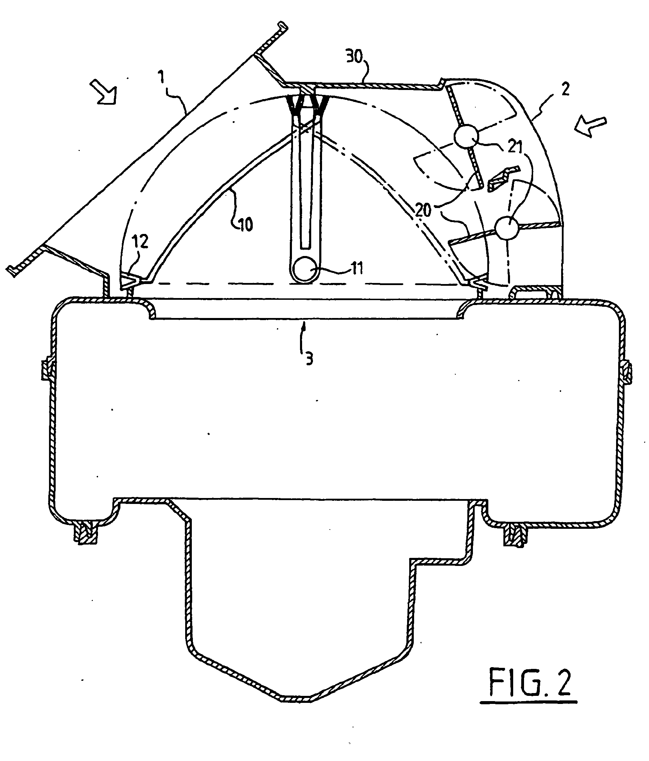

La figure 2 illustre une variante de réalisation par rapport à la forme de réalisation illustrée dans la figure 1, et qui ne fait pas partie de l'invention revendiquée, dans laquelle les mêmes composants sont pourvus des mêmes références numériques et ceux-ci ne seront pas décrits à nouveau en détail dans la mesure où ils restent inchangés. Contrairement à la forme de réalisation illustrée dans la figure 1, il est prévu non pas un clapet à papillon unique dans l'entrée d'air ambiant 2, mais un agencement de deux clapets à papillon. Comme dans la forme de réalisation illustrée dans la figure 1, les axes 21 s'étendent essentiellement parallèlement à l'axe 11 du clapet à coquille 10, la distance à l'axe 11 étant légèrement plus grande que la dimension radiale maximale du clapet à coquille 10. L'homme de l'art reconnaîtra qu'une autre division de l'entrée d'air ambiant 2 est également possible, pour réduire encore la déviation des clapets à papillon. Comme illustré, l'air ambiant partiel peut être utilisé ainsi dans la mesure du recouvrement partiel de l'entrée d'air frais 1 par le clapet à coquille 10 pour la pression dynamique.

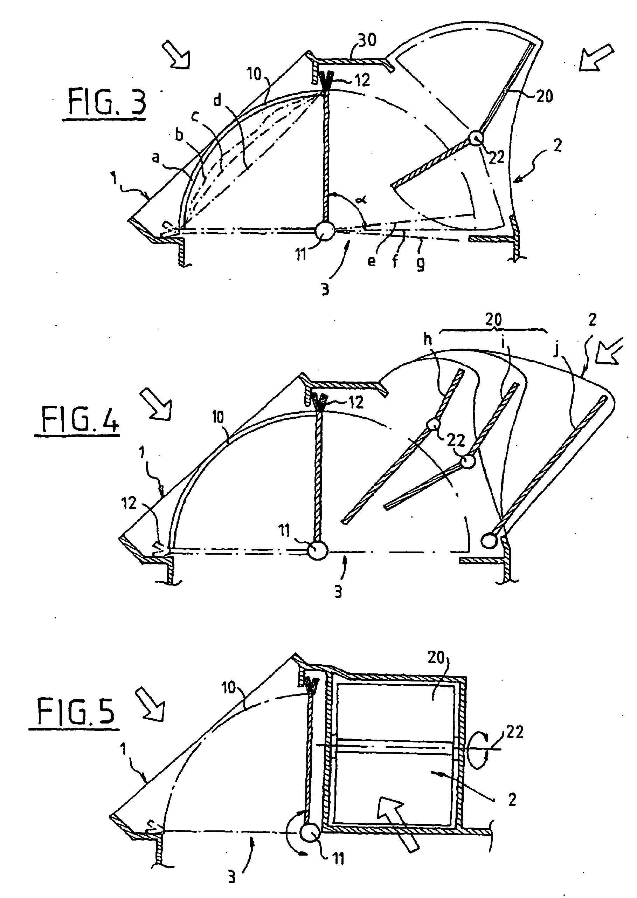

La figure 3 illustre une autre forme de réalisation du boîtier de guidage d'air dans une vue partielle par rapport à la portion supérieure. Dans ce cas également, les composants correspondants sont pourvus des mêmes références numériques. Comme illustré, le clapet à coquille 10 peut prendre les géométries les plus diverses, comme par exemple, en coupe, la forme d'un arc de cercle, d'une courbe libre, d'une trajectoire elliptique ou également d'une droite. Il est aussi possible d'articuler le clapet cylindrique pour divers angles de rotation possibles sur l'axe 11, par exemple avec un angle de rotation d'environ 90° ou également un angle de rotation supérieur ou inférieur à cette valeur. Contrairement à la forme de réalisation illustrée dans la figure 1, le clapet à papillon 20 dans cette forme de réalisation, pour l'ouverture de l'entrée d'air ambiant 2, ne peut plus pivoter dans le sens antihoraire, mais dans le sens horaire. Ceci présente l'avantage, dans la configuration illustrée, que le clapet à papillon 20 peut d'abord utiliser l'espace qui est libéré en premier par le clapet à coquille 10. En outre, la pression dynamique appliquée dans une position intermédiaire du clapet à coquille 10 pousse le clapet à papillon à se fermer, de sorte qu'un reflux intempestif vers l'intérieur dans le canal derrière l'entrée d'air ambiant 2 peut pratiquement être exclu.

La figure 4 illustre, dans une représentation similaire à la figure 3, diverses possibilités de configuration et d'agencement du clapet à ailettes ou à papillon 20 dans la région de l'entrée d'air ambiant 2. Il est ainsi illustré la pluralité des possibilités de combinaison du clapet à coquille et du clapet à ailettes ou à papillon. Comme on peut le voir, l'insertion du clapet à papillon dans le volume dans lequel le clapet à coquille 10 agit, est d'autant plus importante que l'axe 21 est prévu vers le haut, avec une réduction correspondante de l'espace de construction requis dans la région de l'entrée d'air ambiant 2.

La figure 5 illustre une représentation selon les figures 3 et 4 d'une variante de réalisation alternative, dans laquelle les axes ne sont plus parallèles mais s'étendent plutôt essentiellement perpendiculairement l'un à l'autre.

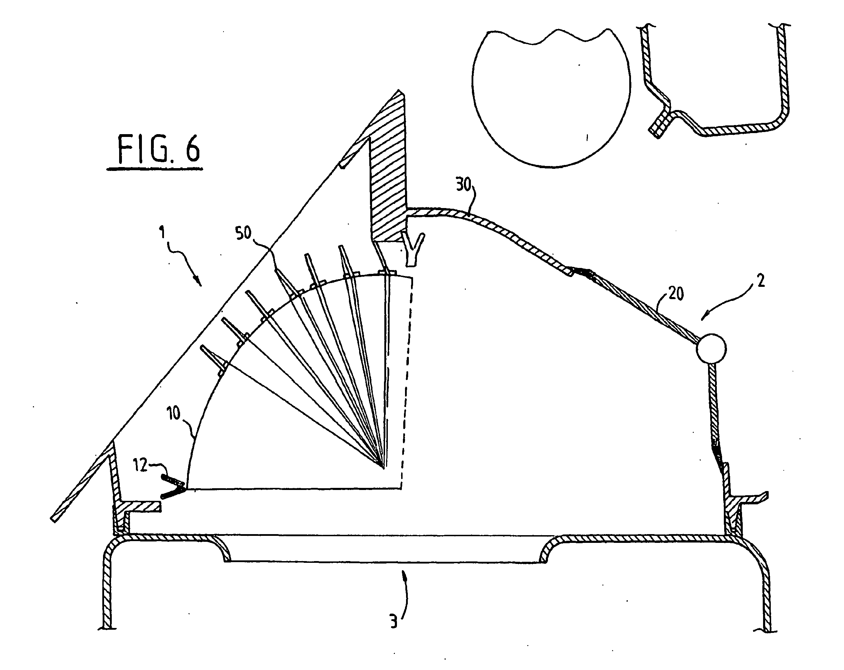

La figure 6 illustre un boîtier de guidage d'air selon l'invention, correspondant essentiellement à la forme de réalisation illustrée dans la figure 3. Comme on peut le voir, le clapet à papillon se trouve dans la position fermée, complètement dans l'entrée d'air ambiant 2. Les modes de fonctionnement sont de nouveau correspondants, et dans une représentation plus limitée, les composants récurrents, qui sont pourvus des mêmes références numériques, ne sont pas décrits à nouveau en détail. Contrairement aux formes de réalisation décrites ci-avant, le clapet à coquille 10 dispose toutefois en outre d'une pluralité de lèvres d'étanchéité moulées par injection, qui s'étendent, suivant la technique de conformation, en groupes essentiellement parallèles. Les lèvres d'étanchéité qui forment conjointement un dispositif d'étanchéité 50, permettent un engagement étanche entre le clapet à coquille 10 et la portion supérieure 30 du boîtier, dans une pluralité de positions intermédiaires du clapet à coquille. Ainsi, on évite que dans une position dans' laquelle le clapet à coquille 10 remplit une fonction pour la pression dynamique, de l'air puisse passer vers l'arrière du clapet à coquille.

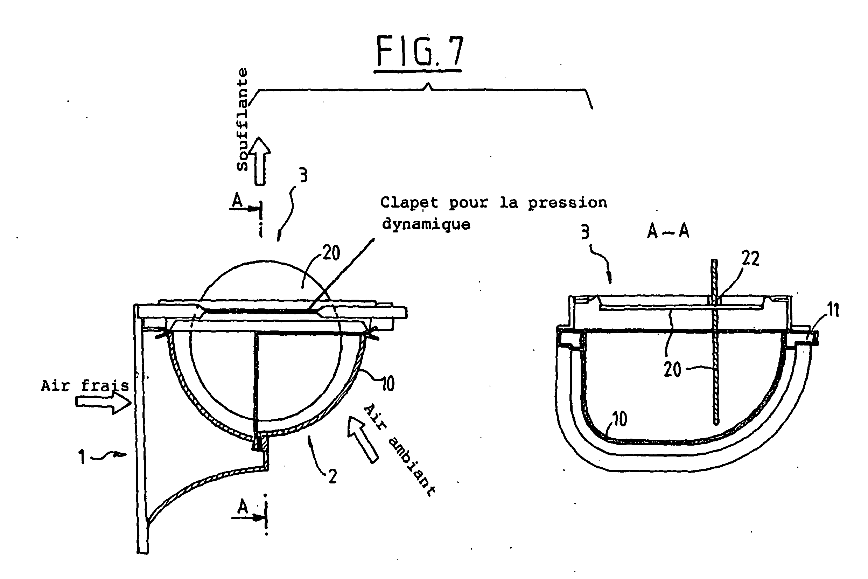

La figure 7 illustre finalement une variante de réalisation d'un boîtier de guidage d'air dans laquelle le clapet à papillon est disposé non dans la région de l'entrée d'air ambiant 2 mais au niveau de la sortie d'air 3 et peut fonctionner comme clapet pour pression dynamique. Le clapet à coquille 10 peut à son tour être disposé dans deux positions extrêmes dans lesquelles à chaque fois un mode d'air frais uniquement et un mode d'air ambiant uniquement sont possibles. Dans le mode d'air ambiant, le clapet à papillon 20 sera habituellement ouvert, afin de conduire l'air ambiant vers la soufflante. Dans le mode d'air frais, le clapet à papillon peut être disposé de manière restrictive dans la sortie d'air 3, par exemple en fonction de la vitesse du véhicule. Il convient de mentionner que dans la forme de réalisation illustrée ici, le clapet à papillon peut être conçu de manière très simple, car une fonction d'étanchéité ne doit pas être remplie. L'agencement illustré des deux clapets permet un contrôle pratiquement indépendant pour une cinématique très simple, car les axes 11, 21 sont pratiquement perpendiculaires l'un à l'autre et car le clapet à papillon servant de clapet pour la pression dynamique, pour chacune de ses positions, est complètement dans le volume défini à l'intérieur du clapet à coquille. Evidemment, un air ambiant partiel correspondant tel que décrit précédemment est réalisable, la régulation de la pression dynamique pouvant être réalisée à la fois par le clapet à coquille 10 et par le clapet à papillon 20. Le positionnement décentré du clapet à papillon 20 permet de configurer l'espace de construction nécessaire de manière très compacte du côté de la sortie d'air.

Pour résumer, on peut noter que le boîtier de guidage d'air selon l'invention permet d'utiliser les avantages des types de clapets différents tels que définis dans la revendication 1 de manière synergique, de sorte qu'une commande simple permette une pluralité de modes de fonctionnement différents sans nécessiter un espace de construction supplémentaire, en particulier dans la région de l'entrée d'air frais. Bien que la présente invention ait été décrite ci-avant complètement et à titre d'exemple en référence aux formes de réalisation actuellement préférées, l'homme de l'art s'apercevra que des variations et modifications les plus variées sont possibles dans le cadre des revendications. En particulier, des caractéristiques individuelles des différentes formes de réalisation décrites peuvent être librement combinées les unes avec les autres. Par exemple, il serait possible de prévoir plusieurs clapets à papillon du côté de la sortie d'air.

## Revendications

1. Boîtier de guidage d'air avec une entrée d'air frais (1), une entrée d'air ambiant (2) et une sortie d'air (3), dans laquelle est prévu un clapet à coquille (10) qui peut connecter, dans ses positions extrêmes, au choix la sortie d'air (3) à l'entrée d'air frais (1) ou à l'entrée d'air ambiant (2), ledit boîtier comprenant au moins un clapet à papillon (20) qui est actionné en fonction de la position du clapet à coquille (10), ledit clapet à papillon (20) pouvant pivoter librement en utilisant un volume libéré par le clapet à coquille (10) et s'insérant alors dans le volume dans lequel le clapet à coquille (10) agit, ledit au moins un clapet à papillon (20) fermant complètement l'entrée d'air ambiant (2) dans une de ses positions extrêmes, **caractérisé en ce que** le clapet à coquille (10) comprend des lèvres d'étanchéité qui forment conjointement un dispositif d'étanchéité (50), permettant un engagement étanche entre le clapet à coquille (10) et une portion supérieure (30) du boîtier, dans une pluralité de positions intermédiaires du clapet à coquille (10).

2. Boîtier de guidage d'air selon la revendication 1, **caractérisé en ce que** les axes (11, 21) du clapet à coquille (10) et du clapet à papillon (20) sont essentiellement parallèles, en particulier espacés d'au moins la dimension radiale maximale du clapet à coquille (10) par rapport à son axe (11).

3. Boîtier de guidage d'air selon la revendication 1, **caractérisé en ce que** les axes (11, 21) du clapet à coquille (10) et du clapet à papillon (20) sont prévus essentiellement perpendiculaires l'un à l'autre.

4. Boîtier de guidage d'air selon l'une quelconque des revendications précédentes, **caractérisé en ce que** le clapet à papillon (20) se trouve dans au moins une position complètement dans l'entrée d'air ambiant (2).

5. Boîtier de guidage d'air selon l'une quelconque des revendications précédentes, **caractérisé en ce que** le clapet à papillon (20) supporte et/ou remplace la fonction du clapet à coquille (10) dans la position bloquant l'entrée d'air ambiant (2).

6. Boîtier de guidage d'air selon l'une quelconque des revendications précédentes, **caractérisé en ce qu'**il est prévu le dispositif d'étanchéité (50) qui isole hermétiquement le clapet à coquille (10) dans au moins l'une des positions s'écartant des positions extrêmes par rapport au boîtier de guidage d'air.

7. Boîtier de guidage d'air selon l'une quelconque des revendications précédentes, **caractérisé en ce que** les clapets (10, 20) peuvent être positionnés de telle sorte que l'on dispose d'une régulation de la pression dynamique et/ou d'un mode d'air ambiant partiel.

## Patentansprüche

1. Luftführungsgehäuse mit einem Frischlufteintritt (1), einem Umlufteintritt (2) und einem Luftaustritt (3), in welchem eine Schalenklappe (10) vorgesehen ist, die in ihren Endpositionen wahlweise den Luftaustritt (3) mit dem Frischlufteintritt (1) oder dem Umlufteintritt (2) in Verbindung setzen kann, wobei das Gehäuse mindestens eine Schmetterlingsklappe (20) umfasst, die in Abhängigkeit von der Position der Schalenklappe (10) betätigt wird, wobei die Schmetterlingsklappe (20) frei schwenken kann, indem sie ein Volumen verwendet, das von der Schalenklappe (10) freigesetzt wird, und indem sie sich dann in das Volumen einfügt, in dem die Schalenklappe (10) wirkt, wobei die mindestens eine Schmetterlingsklappe (20) den Umlufteintritt (2) in einer ihrer Endpositionen komplett verschließt, **dadurch gekennzeichnet, dass** die Schalenklappe (10) Dichtlippen umfasst, die zusammen eine Dichtungseinrichtung (50) bilden, was einen dichten Eingriff zwischen der Schalenklappe (10) und einem oberen Abschnitt (30) des Gehäuses in vielen Zwischenpositionen der Schmetterlingsklappe (10) gestattet.

2. Luftführungsgehäuse nach Anspruch 1, **dadurch gekennzeichnet, dass** die Achsen (11, 21) der Schalenklappe (10) und der Schmetterlingsklappe (20) im Wesentlichen parallel vorliegen, insbesondere um mindestens die maximale radiale Abmessung der Schalenklappe (10) in Bezug auf ihre Achse (11) beabstandet.

3. Luftführungsgehäuse nach Anspruch 1, **dadurch gekennzeichnet, dass** die Achsen (11, 21) der Schalenklappe (10) und der Schmetterlingsklappe (20) im Wesentlichen normal zueinander vorgesehen sind.

4. Luftführungsgehäuse nach einem der vorhergehenden Ansprüche, **dadurch gekennzeichnet, dass** sich die Schmetterlingsklappe (20) in mindestens einer Position vollständig im Umlufteintritt (2) befindet.

5. Luftführungsgehäuse nach einem der vorhergehenden Ansprüche, **dadurch gekennzeichnet, dass** die Schmetterlingsklappe (20) die Funktion der Schalenklappe (10) in der den Umlufteintritt (2) sperrenden Position unterstützt und/oder ersetzt.

6. Luftführungsgehäuse nach einem der vorhergehenden Ansprüche, **dadurch gekennzeichnet, dass** die Dichtungseinrichtung (50) vorgesehen ist, die die Schalenklappe (10) in mindestens einer von den Endpositionen abweichenden Position in Bezug auf das Luftführungsgehäuse hermetisch abdichtet.

7. Luftführungsgehäuse nach einem der vorhergehenden Ansprüche, **dadurch gekennzeichnet, dass** die Klappen (10, 20) derart positionierbar sind, dass eine Staudruckregelung und/oder ein Teilumluftmodus bereitgestellt sind.

## Claims

1. Air guiding housing with a fresh air inlet (1), a surrounding air inlet (2) and an air outlet (3), wherein a shell valve (10) is provided which can connect, in the extreme positions thereof, the air outlet (3) either to the fresh air inlet (1) or to the surrounding air inlet (2), said housing comprising at least one butterfly valve (20) which is actuated as a function of the position of the shell valve (10), said butterfly valve (20) being able to pivot freely using a volume freed by the shell valve (10) and thus inserted into the volume wherein the shell valve (10) operates, said at least one butterfly valve (20) closing the surrounding air inlet (2) completely in one of the extreme positions thereof, **characterised in that** the shell valve (10) comprises sealing lips which jointly form a sealing device (50), making possible a leaktight engagement between the shell valve (10) and an upper portion (30) of the housing, in a plurality of intermediate positions of the shell valve (10).

2. Air guiding housing according to claim 1, **characterised in that** the axes (11, 21) of the shell valve (10) and the butterfly valve (20) are essentially parallel, particularly spaced by at least the maximum radial dimension of the shell valve (10) with respect to the axis (11) thereof.

3. Air guiding housing according to claim 1, **characterised in that** the axes (11, 21) of the shell valve (10) and the butterfly valve (20) are provided essentially perpendicular with respect to each other.

4. Air guiding housing according to any of the above claims, **characterised in that** the butterfly valve (20) is located in at least one position completely in the surrounding air inlet (2).

5. Air guiding housing according to any of the above claims, **characterised in that** the butterfly valve (20) supports and/or replaces the function of the shell valve (10) in the position blocking the surrounding air inlet (2).

6. Air guiding housing according to any of the above claims, **characterised in that** the sealing device (50) is provided which hermetically isolates the shell valve (10) in at least one of the positions deviating from the extreme positions with respect to the air guiding housing.

7. Air guiding housing according to any of the above claims, **characterised in that** the valves (10, 20) may be positioned so as to provide regulation of the dynamic pressure and/or a partial surrounding air mode.
